# EUROPEAN PATENT APPLICATION

(11) **EP 1 638 260 A1**
(43) Date of publication of application: **22.03.2006**
(21) Application number: 05291902.4
(22) Date of filing: 14.09.2005
(51) Int. Cl.: H04L 12/46

(54) **Bypass switch for an ethernet-type network**

(30) Priority: 20.09.2004 US 610977
(71) Applicant: Bombardier Transportation GmbH, 13627 Berlin (DE)
(72) Inventor: Valsorda, Paolo, Longueuil, Québec J4M 2J8 (CA)
(74) Representative: Breese Derambure Majerowicz

(57) **Abstract**

A bypass switch for an Ethernet-type network, the Ethernet-type network including a plurality of Ethernet devices connected to a common communication channel. The bypass switch is associated with a respective one of the plurality of Ethernet devices, and is capable to disconnect the respective Ethernet device from the communication channel upon detecting a failure of the respective Ethernet device.

## Description

### FIELD OF THE INVENTION

The present invention relates to the field of Ethernet networks. More specifically, it pertains to a bypass switch for an Ethernet-type network.

### BACKGROUND OF THE INVENTION

Rail transportation vehicles, such as trains, are typically characterized by a computer networking infrastructure that allows for communication between the cab and various cars of the rail vehicle. This networking infrastructure includes a communication channel as well as a plurality of network elements, such as nodes, routers and switches, which are distributed among the different cars of the rail vehicle. All of the network elements of the networking infrastructure implement a common protocol, for exchanging data signals over the communication channel.

Existing networking protocols currently in use on rail vehicles include E1, Token Bus (IEEE 802.4) and TCN (Train Communication Network). Unfortunately, these commonly used networking protocols are constrained in terms of their maximum data transmission speed, typically to 1 or 2 Mbps.

When in use on a rail vehicle, network technology must be adapted to the rail vehicle environment, in which the cars of the vehicle, and thus the network elements, are connected and communicate in series. Of particular importance is the capability of the network technology to address the situation where one of the vehicle cars goes "off-line" (also referred to as a "dead car") and thus interrupts the communication link between all of the cars of the rail vehicle. Since a dead car, and the resulting faulty communication link, may go unnoticed by the driver or operator of the rail vehicle, an appropriate back-up solution is required of the network technology.

In the case of each of the E1, Token Bus and TCN network technologies, an associated bypass switch has been developed and is used as a back-up solution for the dead car scenario. Each car of the vehicle is provided with a respective bypass switch which, when it is detected that the respective car has gone off-line, is opened. An open bypass switch effectively cuts off the respective car from the communication channel and the remaining cars of the rail vehicle, thus allowing the dead car to be bypassed without affecting the communication link between the remaining cars of the rail vehicle.

Unfortunately, although attempts have been made recently to introduce newer and faster network protocols, such as the Ethernet protocol, to the rail vehicle environment, the "dead car" problem continues to be a major stumbling block to successful implementation. In the case of Ethernet technology, which allows for data transmission speeds of 10 to 100 Mbps, all of the market-available network elements are designed for static network infrastructure applications only.

Accordingly, there is a need in the industry for a bypass switch for an Ethernet-type network, in order to support the application of Ethernet-based technology to the rail vehicle environment.

### BRIEF DESCRIPTION OF THE DRAWINGS

A detailed description of examples of implementation of the present invention is provided hereinbelow with reference to the following drawings, in which:
Figure 1 is a side planar view of an example of a typical rail vehicle;
Figure 2 illustrates a networking infrastructure characterizing the rail vehicle shown in Figure 1, in accordance with an example of implementation of the present invention;
Figure 3 illustrates the network configuration of one of the cars of Figure 2, with a functional view of a bypass switch in accordance with an example of implementation of the present invention;
Figure 4 is a functional block diagram of the bypass switch shown in Figure 3, in accordance with an example of implementation of the present invention;
Figures 5A and 5B illustrate an example of a hardware implementation of the switch fabric of the bypass switch shown in Figure 4, in accordance with an example of implementation of the present invention; and
Figure 6 illustrates an example of an Ethernet-type networking infrastructure implemented on the rail vehicle of Figure 1, in accordance with an example of implementation of the present invention.

In the drawings, embodiments of the invention are illustrated by way of example. It is to be expressly understood that the description and drawings are only for purposes of illustration and as an aid to understanding, and are not intended to be a definition of the limits of the invention.

### DETAILED DESCRIPTION

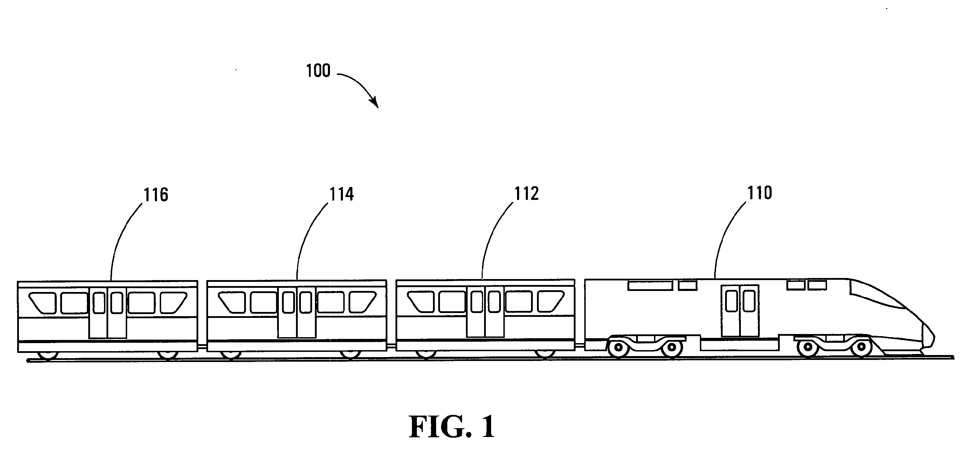

Figure 1 illustrates an example of a typical rail vehicle. The rail vehicle 100 has a plurality of cars 110, 112, 114 and 116. The driver or operator of the rail vehicle 100 drives the vehicle 100 and controls the various pieces of equipment mounted to the vehicle 100 from the cab, in this example car 110. Clearly, the rail vehicle 100 may be provided with more or less than four cars, without departing from the scope of the present invention.

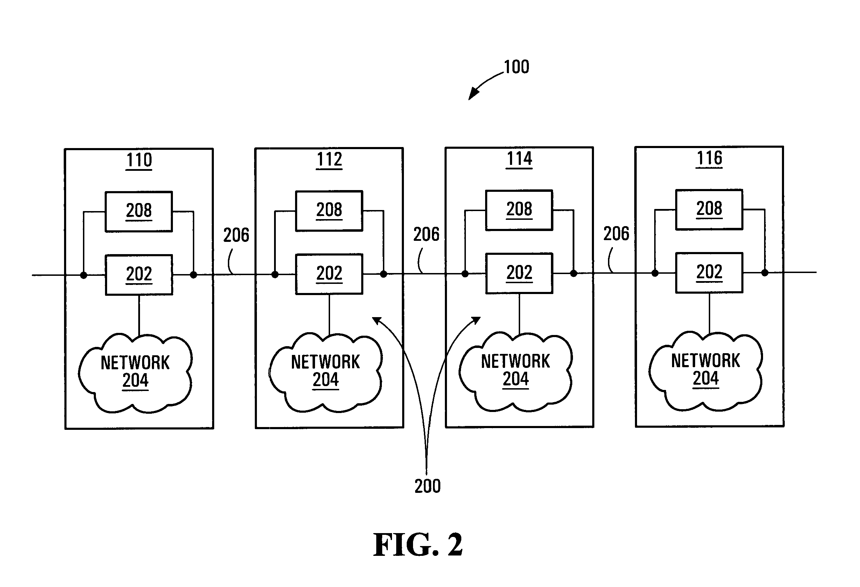

As shown in Figure 2, the rail vehicle 100 is characterized by a networking infrastructure 200. Each car of the rail vehicle 100 is provided with a dedicated network element 202, such as a switch, a router, a bridge or a hub, for interfacing between the network 204 and a communication link 206.

The network 204 is a local area network that connects the multiple computers and peripheral devices provided onboard of the rail vehicle 100, spanning all of the cars 110, 112, 114, 116.

The communication link 206 is shared by all of the cars 110, 112, 114 and 116, and allows for information to be exchanged between the various devices of the network 204, from one car to another.

Note that the network 204 is regulated by a protocol, which governs any and all communications occurring over the communication link 206.

Each network element 202 is designed to receive information, in the form of electronic data signals, generated by network devices local to the respective car of the rail vehicle 100, and to forward these data signals on to the other cars, via the communication link 206. Similarly, each network element 202 also receives data signals over the communication link 206 and forwards these data signals to the local network devices of its respective car, if applicable. Thus, all network communications entering or leaving a car of the rail vehicle 100 must pass through the respective network element 202.

In a specific example, each car 110, 112, 114, 116 is provided with a network controller (not shown), for interfacing between the local dedicated network element 202 and the network 204. This network controller may be operative to perform a multitude of different operations, including for example routing operations, traffic regulation operations and traffic filtering operations, among many other possibilities. Such network controllers are well known to those skilled in the art and, as such, will not be discussed in further detail.

In a specific, non-limiting example of implementation of the present invention, the networking infrastructure 200 implements Ethernet-type technology. Thus, the communication link 206 is implemented by a physical medium, such as twisted pair wires or fiber optic cabling, among other possibilities. Furthermore, the computing devices of the network 204, including the network elements 202, implement an Ethernet-like protocol for regulating communication there between.

Under one example of an Ethernet-like protocol, the network devices (commonly referred to as nodes under Ethernet terminology) communicate in short messages called frames, which are variably sized chunks of information. More specifically, a frame is a unit of information that is transmitted as whole through the network, and that may contain data and/or voice signals. These frames are characterized by minimum and maximum lengths, as well as by a set of required pieces of information that must appear therein. Each frame must include, for example, both a destination address and a source address, which identify the recipient and the sender of the message, as well as a payload section containing the data and/or voice signal(s). Each address uniquely identifies a node of the network 204, since no two Ethernet devices should ever have the same address.

Since the Ethernet protocol and Ethernet-like protocols are well known to those skilled in the art and have been well documented, they will not be described in further detail herein. Documentation on the IEEE 802.3 standard, which is publicly available from the Institute of Electrical and Electronics Engineers, Inc. (www.ieee.org), provides additional detailed information about Ethernet technology.

Specific to the present invention, each car 110, 112, 114, 116 is provided with a local bypass switch 208 connected in parallel with the network element 202, as seen in Figure 2. This bypass switch 208 is capable to disconnect the network element 202, and thus the respective car, from the communication link 206 in cases where the network element 202 is faulty or has failed. Accordingly, the bypass switch 208 is operative to compensate for what is commonly referred to as a "dead car", which would interrupt the communication link 206.

Note that, although the bypass switch of the present invention is described herein in the context of a particular application in the rail vehicle environment, it is applicable to various different Ethernet-type networking infrastructures in various different environments, which applications are included in the scope of the present invention.

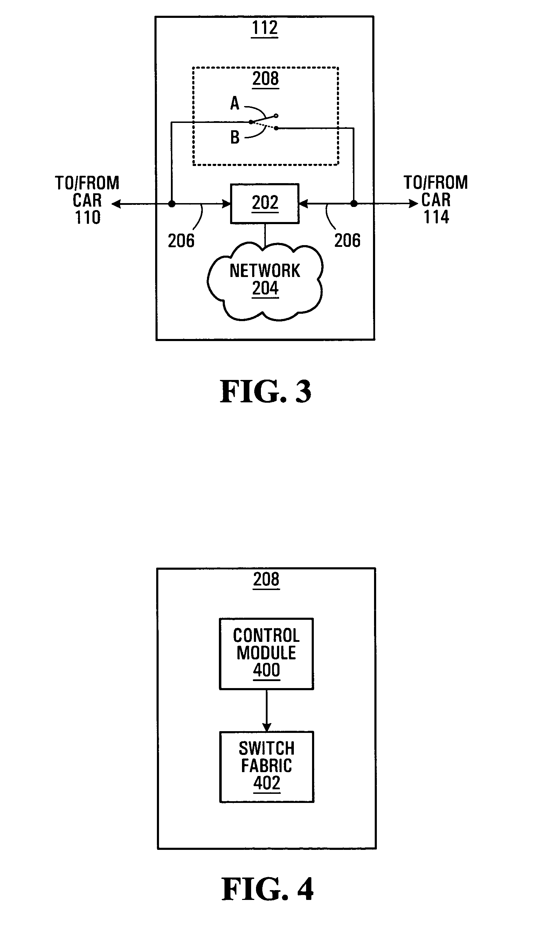

Figure 3 depicts the network configuration of car 112 of the rail vehicle 100, with a functional view of bypass switch 208. As is shown, bypass switch 208 is capable to acquire first and second operative modes. In the first operative mode A, the bypass switch 208 is open, such that network element 202 operates normally and interfaces between the local devices of the network 204 and the communication link 206. In the second operative mode B, the bypass switch 208 is closed, forming a short circuit that causes network element 202 to be bypassed such that the car 112 is disconnected from the communication link 206.

Note that, during power up of the rail vehicle, all of the bypass switches 208 are set to a default position. In a specific example, this default position corresponds to the first operative mode A, in which the bypass switches 208 are open and all of the network elements 202 operate normally.

In a specific, non-limiting example of implementation of the present invention, the bypass switches 208 are adapted for use with Ethernet-type network configurations on the rail vehicle 100. Thus, each bypass switch 208 is compatible with Ethernet-type technology and operative to compensate for a defective Ethernet-type device.

Figure 4 is a functional block diagram of a bypass switch 208, in accordance with an example of implementation of the present invention. The bypass switch 208 includes a control module 400 and a switch fabric 402. The control module 400 sets the operative mode of the bypass switch 208, on the basis of the operation of the associated network element 202. In other words, the control module 400 causes the bypass switch to acquire either the first operative mode A (i.e. open switch) or the second operative mode B (i.e. closed switch), depending on whether the associated network element 202 is in good operation or has failed.

The switch fabric 402 is coupled to the control module 400 and provides the different possible connection paths of the bypass switch 208. Thus, the connection path configuration of the bypass switch 208 is established by the switch fabric 402 on the basis of instructions received from the control module 400. Since the functionality of a switch fabric is well known to those skilled in the art, it will not be described in further detail herein.

At power up of the rail vehicle 100, and thus of all of its equipment including the network devices, the control module 400 instructs the switch fabric 402 to establish a default "open" connection path, such that the bypass switch 208 acquires the first operative mode A. If the control module 400 later detects a failure of the associated network element 202, the control module 400 will then instruct the switch fabric 402 to establish a "closed" connection path, such that the bypass switch 208 acquires the second operative mode B.

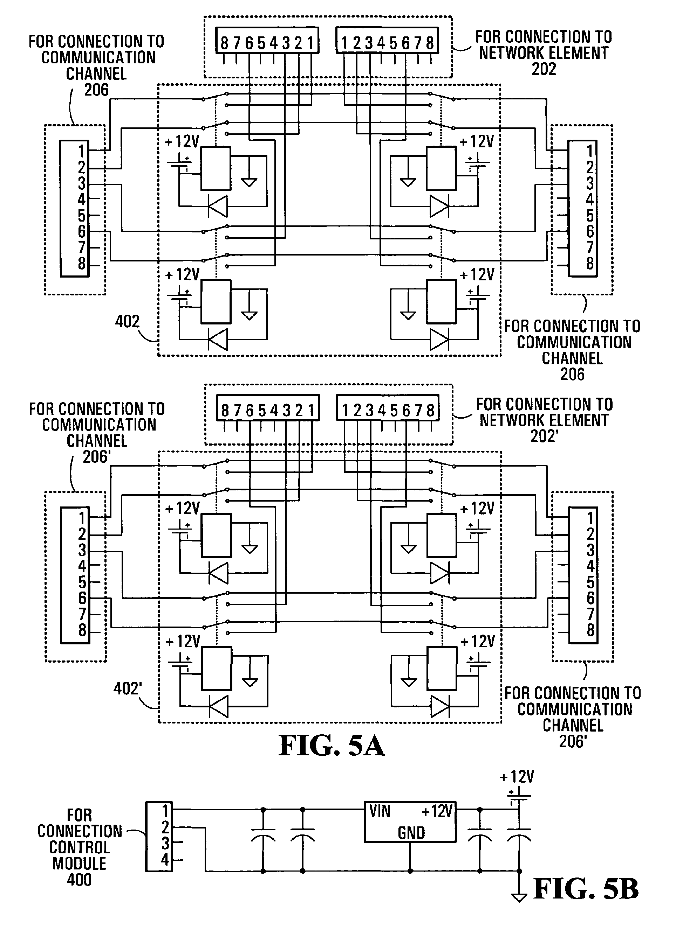

In a specific, non-limiting example, the Ethernet-compatible bypass switch 208 is an electro-mechanical switch, implemented in both software and hardware. Thus, the control module 400 is implemented in software by a computing device having a Central Processing Unit (CPU), a memory and a bus connecting the CPU to the memory. The memory holds program instructions for execution by the CPU to implement the functionality of the control module. The switch fabric 402 itself is implemented in hardware, for example as shown in Figures 5A and 5B. In these Figures, relays are used to implement the connection paths of the bypass switch 208, while connectors enable the connections to the communication link 206, the network element 202 and the control module 400, in accordance with Ethernet protocol. As seen in Figure 5A, the relays may be switched between a position in which the network element 202 is connected to the connection link 206 (i.e. when the car is operating normally and is on-line) and a position in which a short circuit is provided between two points of the connection link 206, thus bypassing the network element 202 (i.e. when the car is off-line). The voltage circuit shown in Figure 5B powers the relays, in response to control signals received from the control module 400.

As discussed above, the control module 400 is operative to cause the bypass switch 208 to acquire the second operative mode B (i.e. to close the bypass switch 208) upon detection of a failure of the associated network element 202. Thus, the control module 400 monitors the functionality of the network element 202, in order to detect any such failure. In a specific example, the control module 400 receives and monitors a particular signal generated by the network element 202, where this particular signal is normally characterized by a predetermined frequency and thus is indicative of the proper or faulty operation of the network element 202. Alternatively, the control module 400 may monitor a power level of the network element 202, where a drop of this power level below a predefined threshold is indicative of a failure of the network element 202. Note that various different implementations of the monitoring and failure detection abilities of the control module 400 are possible and are included in the scope of the present invention.

In a variant example of implementation of the present invention, the bypass switch 208 may include a broadcast module (not shown), either integral with or separate from the control module 400. Upon detection of a failure of the associated network element 202 by the control module 400, the broadcast module is operative to transmit a broadcast message over the communication channel 206 for announcing a failed network element 202, and thus a "dead car", to all of the other network elements 202 and cars of the rail vehicle 100.

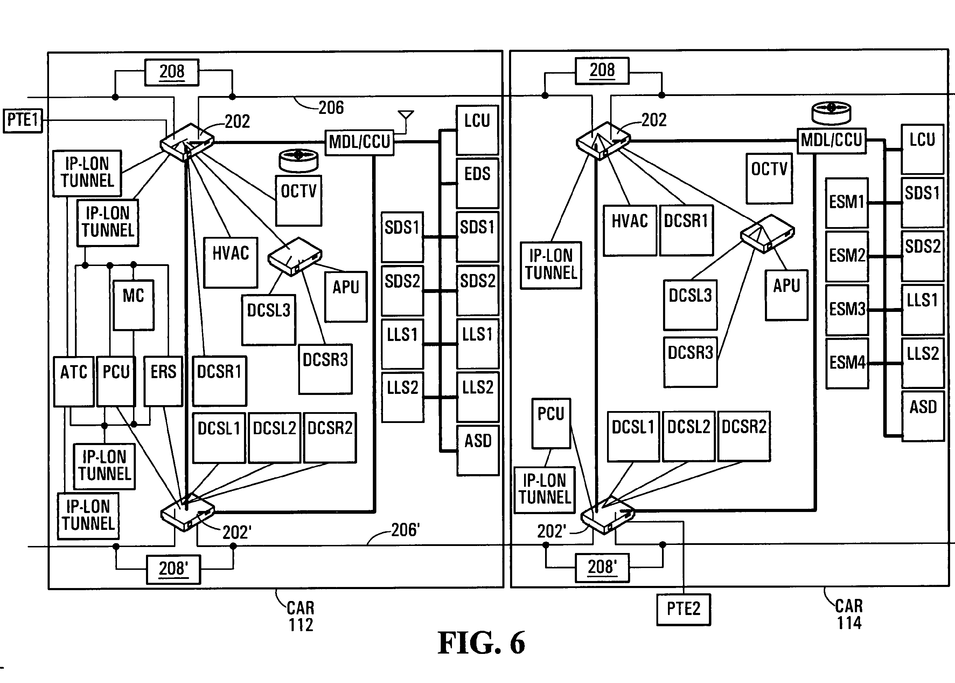

Figure 6 illustrates an example of an Ethernet-type networking infrastructure 200 implemented on the rail vehicle 100, in accordance with the present invention, shown only with respect to cars 112 and 114 for purposes of clarity. It can be seen in Figure 6 that, on board each car of the rail vehicle 100, there are provided multiple different computing devices of the network 204, all of which are connected, either directly or indirectly, to the respective network element 202. Each bypass switch 208 allows for the disconnection of the respective network element 202, and thus of the respective car, from the communication channel 206 without impairing communication over the communication channel 206 by the other cars of the rail vehicle 100.

Optionally, and as shown in the specific examples of Figures 5A and 6, the networking infrastructure of the rail vehicle 100 may be characterized by redundancy. More specifically, for each car 110, 112, 114 and 116, the network devices are doubled in order to provide a safeguard for faulty or failed devices. Accordingly, there is provided a backup communication channel 206', backup network elements 202' and backup bypass switches 208'. In the example of Figure 5A, all hardware is doubled in order to provide a primary switch fabric 402 and a backup switch fabric 402'. The use of redundancy within networking infrastructures on board of rail vehicles is a common practice and is well known to those skilled in the art. Since this use of redundancy is not critical to the present invention, it will not be described in further detail herein.

Although various embodiments have been illustrated, this was for the purpose of describing, but not limiting, the invention. Various modifications will become apparent to those skilled in the art and are within the scope of this invention, which is defined more particularly by the attached claims.

## Claims

1. A bypass switch for an Ethernet-type network, the Ethernet-type network including a plurality of Ethernet devices connected to a common communication channel, said bypass switch being associated with a respective one of the plurality of Ethernet devices, said bypass switch being capable to disconnect the respective Ethernet device from the communication channel upon detecting a failure of the respective Ethernet device.

2. A bypass switch as defined in claim 1, wherein said bypass switch is operative to acquire either one of a first operative mode and a second operative mode, in said first operative mode said bypass switch enabling the connection of the respective Ethernet device to the communication channel, in said second operative mode said bypass switch causing the disconnection of the respective Ethernet device from the communication channel.

3. A bypass switch as defined in claim 1, wherein the respective one of the plurality of Ethernet devices is selected from the group consisting of an Ethernet switch, an Ethernet hub, an Ethernet bridge and an Ethernet router.

4. A bypass switch as defined in claim 1, wherein said bypass switch is an electro-mechanical switch.

5. A bypass switch as defined in claim 2, wherein said bypass switch includes a control module and a switch fabric.

6. A bypass switch as defined in claim 5, wherein said control module is operative to set said operative mode of said bypass switch on a basis of the operation of the respective one of the plurality of Ethernet devices.

7. A bypass switch as defined in claim 6, wherein said control module monitors the respective one of the plurality of Ethernet devices for detecting a failure of the respective one of the plurality of Ethernet devices.

8. A bypass switch as defined in claim **5,** wherein said bypass switch further includes a broadcast module for advising the other ones of the plurality of Ethernet devices of a failure of the respective one of the plurality of Ethernet devices.

9. A bypass switch as defined in claim 8, wherein said broadcast module is operative to transmit a broadcast message over the common communication channel of the Ethernet-type network.

10. An Ethernet-type network comprising:
a) a communication channel;
b) a plurality of Ethernet devices connected to said communication channel, said plurality of Ethernet devices capable to exchange information signals via said communication channel;
c) a plurality of bypass switches, each bypass switch being associated with a respective one of said plurality of Ethernet devices, each bypass switch being capable to disconnect said respective Ethernet device from said communication channel upon detecting a failure of said respective Ethernet device.

11. An Ethernet-type network as defined in claim 10, wherein each of said bypass switches is operative to acquire either one of a first operative mode and a second operative mode, in said first operative mode said bypass switch enabling the connection of said respective Ethernet device to said communication channel, in said second operative mode said bypass switch causing the disconnection of said respective Ethernet device from said communication channel.

12. An Ethernet-type network as defined in claim 10, wherein said respective ones of the plurality of Ethernet devices are selected from the group consisting of Ethernet switches, Ethernet hubs, Ethernet bridges and Ethernet routers.

13. An Ethernet-type network as defined in claim 10, wherein each of said bypass switches is an electro-mechanical switch.

14. An Ethernet-type network as defined in claim 11, wherein each of said bypass switches includes a control module and a switch fabric.

15. An Ethernet-type network as defined in claim 14, wherein said control module is operative to set said operative mode of said respective bypass switch on a basis of the operation of said respective Ethernet device.

16. An Ethernet-type network as defined in claim 15, wherein said control module monitors said respective Ethernet device for detecting a failure of said respective Ethernet device.

17. An Ethernet-type network as defined in claim 14, wherein each of said bypass switches further includes a broadcast module for advising the other ones of the plurality of Ethernet devices of a failure of said respective Ethernet device.

18. An Ethernet-type network as defined in claim 17, wherein said broadcast module is operative to transmit a broadcast message over said communication channel.

19. An Ethernet-type network as defined in claim 10, wherein said communication channel is implemented by twisted pair wires.

20. An Ethernet-type network as defined in claim 10, wherein said communication channel is implemented by fiber optic cabling.

21. A rail vehicle including the Ethernet-type network of claim 10.

22. A rail vehicle comprising:
a) a plurality of cars;
b) an Ethernet-type network enabling communication between said cars, said Ethernet-type network including:
i) a communication channel;
ii) a plurality of Ethernet switches connected to said communication channel for exchanging information signals via said communication channel, each Ethernet switch being provided on a respective one of said plurality of cars;
iii) a plurality of bypass switches, each bypass switch being provided on a respective one of said plurality of cars in association with said respective Ethernet switch, each bypass switch being capable to disconnect said respective Ethernet switch from said communication channel upon detecting a failure of said respective Ethernet switch.
